# EUROPEAN PATENT SPECIFICATION

(11) **EP 1 351 535 B1**
(45) Date of publication and mention of the grant of the patent: **11.02.2009**
(21) Application number: 02252254.4
(22) Date of filing: 27.03.2002
(51) Int. Cl.: H04W 36/08

(54) **Control of frame timing on handover**
Rahmentaktregelung zum Weiterreichen
Contrôle d'horloge de trame dans le transfert

(43) Date of publication of application: 08.10.2003
(73) Proprietor: TELEFONAKTIEBOLAGET LM ERICSSON (publ), 164 83 Stockholm (SE)
(72) Inventor: Palenius, Torgny, 246 50 Löddeköpinge (SE); Ostberg, Christer, 245 44 Staffanstorp (SE)
(74) Representative: O'Connell, David Christopher

(56) References cited:
- WO-A-02/07345
- WO-A-02/15624
- US-A- 5 640 679
- US-B1- 6 208 871

## Description

### Technical Field of the Invention

This invention relates to a mobile communications system, and in particular to a method of controlling the timing of frames defined for data receipt and transmission in a mobile communications device. Other aspects of the invention relate to the mobile communications device itself, and to the network which implements the method.

### BACKGROUND OF THE INVENTION

In the proposed Universal Mobile Telephony System (UMTS), defined by the standards published by the 3rd Generation Partnership Project (3GPP), a mobile device, or user element UE, can establish links with several cells in the cellular radio network.

The data received by the user equipment from each of the cells is transmitted in frames on respective downlink channels. The frames in the respective downlink channels are not synchronized with each other. Moreover, because of possible movement of the user equipment relative to the base stations in the different cells, the timing of each downlink frame, relative to the other received downlink frames, can change.

The user equipment transmits data in frames on uplink channels to the base stations in the cells with which the user equipment has links. Thus, there is defined for the user equipment a transmission frame timing, which is common to all of the uplink channels. This transmission frame timing is defined with reference to the downlink frame timing of one of the active links.

Thus, in the Technical Specification 3GPP TS 25.133 v3.8.0, section 7, and the associated test case at section A.7, there is described a method for defining the timing of the uplink transmission frame. Specifically, in the case where there is a single active link, the uplink frame transmission takes place a time T₀ (=1,024 chips) after the reception of the first detected path of the corresponding downlink frame.

When the user equipment has one active link with a cell, its transmission frame timing is set with reference to the downlink frame timing of that cell, and the transmission frame timing is still defined with reference to the downlink frame timing of that first cell, even when a second cell is added to the active set. However, in that case, when the first cell is removed from the active set, the uplink transmit timing is adjusted, at a defined adjustment rate, until the uplink frame transmission takes place T₀ (=1,024 chips) after the reception of the first detected path of the downlink frame from the remaining active link.

Thus, according to the published Technical Specification, there is defined a reference cell, that is the cell with reference to which the uplink frame transmission is defined. When there are two active links, and the reference cell is removed from the active set, the remaining cell becomes the reference cell.

However, this does not indicate how the uplink frame transmission should be defined in the event of a soft handover, when there are more than two active links, and the reference cell is removed from the active set.

WO 02/07346 discloses a handover controlling method in an RNC connected to a first Node B and a second Node B in a mobile communication system where a USTS service occurs between the first Node B and a UE within a cell of the first Node 8 and the UE hands over when the UE is located in a handover area across the cell areas of the first Node B and the second Node B adjacent to the first node B.

US 6,208,871 discloses a method for providing time adjustment to the second base transceiver of a wireless communication system including at least a first and a second base transceiver station. The method includes determining a timing adjustment calculation based on a first time offset of the first and a second time offset of the second signal by the mobile station.

### SUMMARY OF THE INVENTION

According to the published Technical Specification, discussed above, the uplink transmission timing is defined with reference to the downlink reception timing of signals from a particular reference cell. When that reference cell is removed from the active set, the Technical Specification envisages that another cell from the active set be defined as the new reference cell, and that the uplink transmission timing should be adjusted so that it is defined with reference to the downlink reception timing from the new reference cell.

However, large adjustments are undesirable, since they can have the effect that another active cell must be removed from the active set, because its transmissions no longer fall within the receiver window of the user equipment. On the other hand, choosing a new reference cell simply because it would require the smallest adjustment may also be undesirable because, if that cell were itself to be removed from the active set, it would then be necessary to choose another new reference cell.

According to the present invention, therefore, there is a method of defining an uplink transmission frame timing, for use in a mobile communications system in which a user equipment may have radio links with a plurality of cells, and in which the cells with which the user equipment has radio links define an active set, wherein the uplink transmission frame timing is defined with reference to the downlink transmission frame timing of a reference cell selected from said active set. The method comprises: when the reference cell is removed from the active set, defining a timing offset with reference to one or more of the cells remaining in the active set, such that the timing of the one or more of the cells remaining in the active set plus the timing offset is equal to the timing of the removed reference cell; and defining the uplink transmission frame timing relative to the timing of the one or more of the cells remaining in the active set plus the timing offset.

This has the advantage that, following a soft handover, it is not necessary to adjust the timing of uplink transmissions from the user equipment.

According to another aspect of the present invention, there is provided user equipment which is able to perform the method as described above, following a soft handover.

It should be emphasised that the term "comprises/comprising" when used in this specification is taken to specify the presence of stated features, integers, steps or components but does not preclude the presence or addition of one or more other features, integers, steps, components or groups thereof.

### BRIEF DESCRIPTION OF DRAWINGS

Figure 1 is a schematic representation of a part of a mobile communications network in accordance with an aspect of the invention.
Figure 2 is a block schematic diagram of a mobile communications device in accordance with an aspect of the invention.
Figure 3 is a timing diagram showing the relationship between uplink and downlink frame timing in accordance with the invention.
Figure 4 is a flow chart illustrating a method in accordance with an aspect of the invention.

### DETAILED DESCRIPTION OF PREFERRED EMBODIMENTS

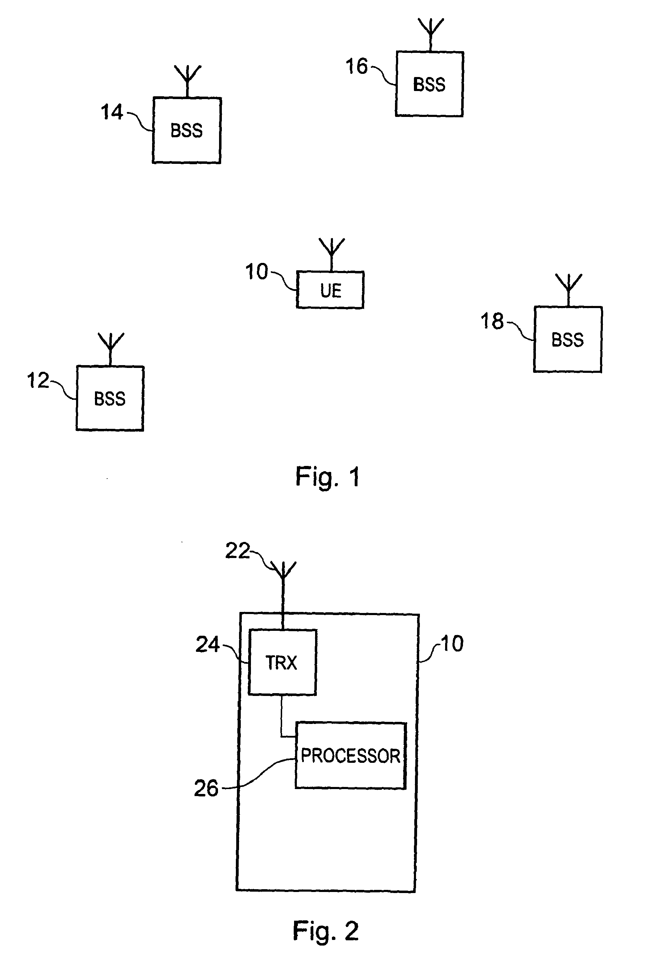

Figure 1 illustrates a part of a mobile communications network in accordance with the present invention. Specifically, Figure 1 shows a user equipment (UE) 10, which is moveable within a network of base station systems (BSS) 12, 14, 16, 18. The base station systems (BSS) 12, 14, 16, 18 have respective overlapping coverage areas, or cells. It will be obvious that the network contains more base station systems than the four shown in figure 1. Each of the base station systems 12, 14, 16, 18 has a respective connection (not shown in Figure 1) to a data communications network.

The invention is described herein with reference to the Universal Mobile Telephony Service (UMTS), as defined by the 3rd Generation Partnership Project (3GPP).

In such a system, the user equipment 10 may have active radio links with more than one base station system.
The base station systems with which the user equipment has active radio links are defined as the active set. In use, for example as the user equipment moves further from or nearer to particular base station systems, some radio links may be lost, and new radio links may be set up. This process of changing the membership of the active set is known as soft handover.

Figure 2 is a schematic diagram of the relevant parts of the user equipment 10. It will be apparent that the user equipment 10 has many other features and functions which are not described herein, as they are not essential for an understanding of the present invention. The user equipment 10 takes the form of portable radio communication equipment, which may for example be a mobile telephone, or personal digital assistant (PDA) with wireless communication facility. The UE 10 has an antenna 22, which receives and transmits signals over the air interface to one or more of the base station systems in the network. Received signals are passed to transceiver (TRX) circuitry 24, and then to a processor 26. Conversely, signals for transmission are passed from the processor 26 to the transceiver circuitry 24, and then to the antenna 22.

The processor 26 is responsible for separating the wanted signals out from all of the received radio signals, and is also responsible for receiving the data which is to be transmitted, and converting it into a form which is suitable for transmission over the air interface.

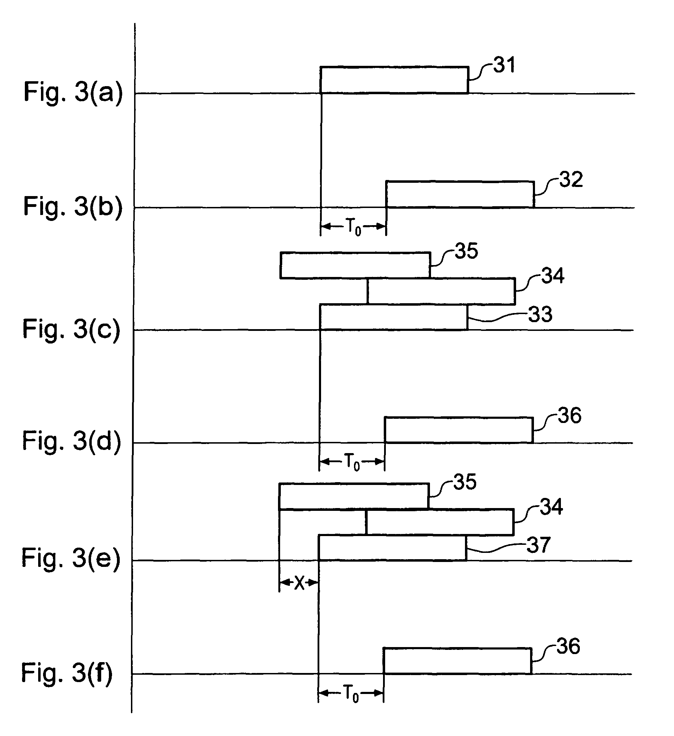

Figure 3 is a timing diagram, in which Figures 3(a) and 3(b) show the situation when the user equipment 10 has one active radio link. In that case, the user equipment sets the timing of a downlink frame 31, namely the frame timing of the detected downlink signals on the active radio link.

Figure 3(b) shows the uplink frame transmission timing. As is conventional, the uplink frame 32 begins T₀ (=1,024 chips) after the reception of the first detected path of the corresponding downlink frame 31.

In use, for example as the user equipment moves relative to the base station with which it has the active radio link, it may be necessary to adjust the frame timings from one frame to the next.

The start of the downlink frame 31 can be referred to as the received radio link timing, and this also defines a receiver window, which extends a fixed time (=148 chips) before and after the received radio link timing. Other radio links are only permitted if their respective received radio link timings are within this receiver window.

Figure 3(c) shows the situation when the user equipment has three radio links. The signals received on the three downlink channels are received at different times, the respective downlink frame timings being illustrated by the reference numerals 33, 34, 35. Figure 3(c) shows the relative timings of the three windows at one particular instant. However, as before, movement of the user equipment relative to the base stations can mean that these relative timings change in use.

As described above with reference to Figure 3(b), the transmit frame 36 is defined with reference to one of the reception frames. In this case, the cell which has the downlink frame timing 33 is defined as the reference cell, and the transmitted frame 36 is set to start T₀ (=1,024 chips) after the start of the received frame 33, as shown in Figure 3(d).

Also, the receiver window, within which the received frames of other active radio links must lie, is defined with reference to the start of the received frame 33.

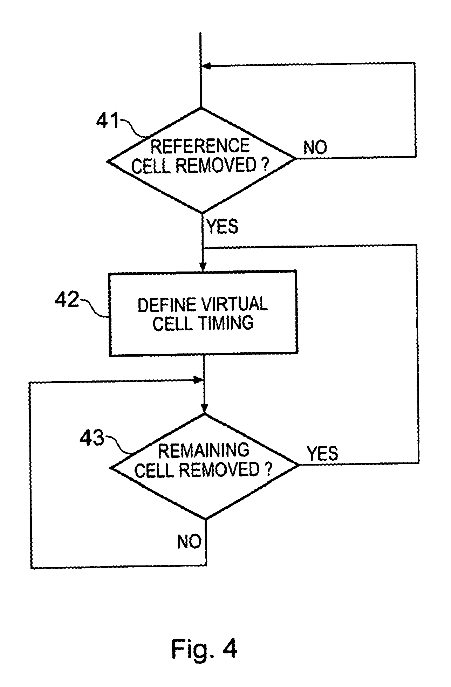

Figure 4 is a flow chart illustrating a method in accordance with the invention, and Figures 3(e) and 3(f) show the relative frame timings which are obtained. In step 41 of the process, it is determined within the user equipment whether the reference cell has been removed from the active set for that user equipment. If is has not, there is no change, and the process returns to the start. However, if the reference cell has been removed from the active set then, in accordance with the present invention, a new virtual reference cell is defined.

Thus, in order to avoid the need to select a new reference cell from the remaining cells of the active set, and therefore the need to adjust the transmission frame timing and the timing of the receiver window, a virtual reference cell is defined. The virtual reference cell is a cell which is not used for reception or transmission of signals over the air interface, but which is used in determining the timing of transmissions. Specifically, as shown in Figure 3(e), the virtual reference cell has a frame timing 37 which corresponds exactly to the receiver frame timing 33 of the previous reference cell.

The timing of the virtual reference cell receiver frame 37 is defined with reference to one of the remaining cells. In the case illustrated in Figure 3(e), the receiver frame timing 37 of the virtual reference cell is defined as being a time X after the receiver frame timing 35 of one of the remaining cells. This remaining cell could be chosen because it has the strongest signal, or because it is the earliest received signal, or because it is the cell which is closest in time to the original reference cell. As an alternative, the timing of the new virtual reference cell could be determined relative to the average timing of the remaining cells.

Then, as shown in Figure 3(f), the transmit frame 36 is defined with reference to the virtual reference cell reception frame 37. Because the virtual reference cell is chosen to have a timing which is the same as the previous reference cell, it is not necessary to make large adjustments to the timing of the transmission frame 36. This means that the transmission frame timing does not need to be adjusted, and therefore that the quality of the modulated signal received in the base station systems will be improved. It further means that the receiver window does not need to be adjusted, and therefore that there is no risk that useful radio links need to be removed from the active set because they no longer fall within the receiver window.

Of course, it should be noted that it remains possible to make adjustments to the frame timings, for example because of frequency errors between the base station and the user equipment, or in order to compensate for movement of the user equipment relative to the base stations, but these adjustments are relatively small.

Once a virtual reference cell has been defined then, in steps 43 of the process shown in Figure 4, it is tested whether the remaining cell, namely the cell with reference to which the virtual reference cell is defined, has been removed from the active set.
Provided that the remaining cell remains in the active set, no action is necessary. However, in the event that that remaining cell is removed from the active set, it is necessary to redefine the timing of the virtual reference cell, for example with reference to one of the other remaining cells, or with reference to the average timing of all of the remaining cells.

There is therefore described a system for defining a transmission frame timing in the event of a soft handover, without interrupting existing transmissions.

As described above, the system is used when the soft handover removes a cell from the active set and a plurality of cells remain in the active set. However, the system in accordance with the invention can also be used by defining a virtual reference cell when one or more cells are removed from the active set and only one cell remains in the active set.

## Claims

1. A method of defining an uplink transmission frame timing, for use in a mobile communications system in which a user equipment (10) may have radio links with a plurality of cells (12, 14, 18, 18), and in which the cells with which the user equipment (10) has radio links define an active set, wherein the uplink transmission frame timing (36) is defined with reference to the downlink transmission frame timing (33) of a reference cell selected from said active set,
the method being **characterized by**
when the reference cell is removed from the active set, defining a timing offset (X) with reference to one or more of the cells remaining in the active set, such that the timing (35) of the one or more of the cells remaining in the active set plus the timing offset (X) is equal to the timing (33) of the removed reference cell; and
defining the uplink transmission frame timing (36) relative to the timing (35) of the one or more of the cells remaining in the active set plus the timing offset (X).

2. A method as claimed in claim 1, wherein the uplink transmission frame timing (36) is defined to be a fixed time after the timing (35) of the one or more of the cells remaining in the active set plus the timing offset (X).

3. A method as claimed in claim 2, for use in UMTS, wherein the uplink transmission frame timing (36) is defined to be T₀ after the timing (35) of the one or more of the cells remaining in the active set plus the timing offset (X).

4. A method as claimed in claim 1, wherein the timing offset (X) is defined with reference to the active cell which first joined the active set.

5. A method as claimed in claim 1, wherein the timing offset (X) is defined with reference to the active cell whose downlink transmission timing most closely corresponds to the downlink transmission timing of the previous reference cell.

6. A method as claimed in claim 1, wherein the timing offset (X) is defined with reference to the active cell from which the strongest signal is being received.

7. A method as claimed in claim 1, wherein the timing offset (X) is defined with reference to the average timing of all of the cells in the active set.

8. A mobile communications device (10), for use in a mobile communications system in which a mobile communications device may have radio links with a plurality of cells (12, 14, 16, 18), and in which the cells with which the device (10) has radio links define an active set,
wherein the device (10) comprises means for defining an uplink transmission frame timing (36) with reference to the downlink transmission frame timing (33) of a reference cell selected from said active set, and
**characterized in that**
the device (10) is adapted, when the reference cell is removed from the active set, to:
define a timing offset (X) with reference to one or more of the cells remaining in the active set, such that the timing (35) of the one or more cells remaining in the active set plus the timing offset (X) is equal to the timing (33) of the removed reference cell; and to
define the uplink transmission frame timing (36) relative to the timing (35) of the one or more cells remaining in the active set plus the timing offset (X).

9. A mobile- communications device (10) as claimed in claim 8, wherein the uplink transmission frame timing (36) is defined to be a fixed time after the timing (35) of the one or more cells remaining in the active set plus the timing offset (X).

10. A mobile communications device (10) as claimed in claim 8, for use in UMTS, wherein the uplink transmission frame timing (36) is defined to be T₀ after the timing (35) of the one or more cells remaining in the active set plus the timing offset (X),

11. A mobile communications device (10) as claimed in claim 8, wherein the timing offset (X) is defined with reference to the active cell which first joined the active set.

12. A mobile communications device (10) as claimed in claim 8, wherein the timing offset (X) is defined with reference to the active cell whose downlink transmission timing most closely corresponds to the downlink transmission timing of the previous reference cell.

13. A mobile communications device (10) as claimed in claim 8, wherein the timing offset (X) is defined with reference to the active cell from which the strongest signal is being received.

14. A mobile communications device (10) as Claimed in claim 8, wherein the timing offset (X) is defined with reference to the average timing of all of the cells in the active set.

## Patentansprüche

1. Verfahren eines Definierens einer Uplink-Übertragungsrahmenzeitsteuerung zur Verwendung in einem Mobilkommunikationssystem, in dem eine Benutzerausrüstung (10) Funkverbindungen mit einer Vielzahl von Zellen (12, 14, 16, 18) aufweisen kann und in dem die Zellen mit denen die Benutzerausrüstung (10) Funkverbindungen aufweist, einen aktiven Satz definieren,
wobei die Uplink-Übertragungsrahmenzeitsteuerung (36) in Bezug auf die Downlink-Übertragungsrahmenzeitsteuerung (33) einer Referenzzelle definiert ist, die aus dem aktiven Satz ausgewählt wird,
wobei das Verfahren **gekennzeichnet ist durch**
wenn die Referenzzelle aus dem aktiven Satz entfernt wird, Definieren eines Zeitsteuerversatzes (X) in Bezug auf eine oder mehrere der Zellen, die in dem aktiven Satz verbleiben, derart, dass die Zeitsteuerung (35) der einen oder mehreren der Zellen, die in dem aktiven Satz verbleiben, plus dem Zeitsteuerversatz (X) gleich zu der Zeitsteuerung (33) der entfernten Referenzzelle ist; und
Definieren der Uplink-Übertragungsrahmenzeitsteuerung (36) bezüglich der Zeitsteuerung (35) der einen oder mehreren der Zellen, die in dem aktiven Satz verbleiben, plus dem Zeitsteuerversatz (X).

2. Verfahren nach Anspruch 1, wobei die Uplink-Übertragungsrahmenzeitsteuerung (36) als eine feste Zeit nach der Zeitsteuerung (35) der einen oder mehreren der Zellen, die in dem aktiven Satz verbleiben, plus dem Zeitsteuerversatz (X) definiert ist.

3. Verfahren nach Anspruch 2, zur Verwendung in UMTS, wobei die Uplink-Übertragungsrahmenzeitsteuerung (36) als T₀ nach der Zeitsteuerung (35) der einen oder mehreren der Zellen, die in dem aktiven Satz verbleiben, plus dem Zeitsteuerversatz (X) definiert ist.

4. Verfahren nach Anspruch 1, wobei der
Zeitsteuerversatz (X) in Bezug auf die aktive Zelle definiert ist, die zuerst an dem aktiven Satz teilnahm.

5. Verfahren nach Anspruch 1, wobei der
Zeitsteuerversatz (X) in Bezug auf die aktive Zelle definiert ist, deren Downlink-Übertragungszeitsteuerung am nächsten der Downlink-Übertragungszeitsteuerung der vorangehenden Referenzzelle entspricht.

6. Verfahren nach Anspruch 1, wobei der
Zeitsteuerversatz (X) in Bezug auf die aktive Zelle definiert ist, von der das stärkste Signal empfangen wird.

7. Verfahren nach Anspruch 1, wobei der
Zeitsteuerversatz (X) in Bezug auf die Durchschnittszeitsteuerung aller der Zellen in dem aktiven Satz definiert ist.

8. Mobilkommunikationsgerät (10) zur Verwendung in einem Mobilkommunikationssystem, in dem ein Mobilkommunikationsgerät Funkverbindungen mit einer Vielzahl von Zellen (12, 14, 16, 18) aufweisen kann und in dem die Zellen, mit dem das Gerät (10) Funkverbindungen aufweist, einen aktiven Satz definieren,
wobei das Gerät (10) eine Vorrichtung zum Definieren einer Uplink-Übertragungsrahmenzeitsteuerung (36) in Bezug auf die Downlink-Übertragungsrahmenzeitsteuerung (33) einer Referenzzelle umfasst, die aus dem aktiven Satz ausgewählt wird, und
**dadurch gekennzeichnet, dass** das Gerät (10) angepasst ist, wenn die Referenzzelle aus dem aktiven Satz entfernt wird,
einen Zeitsteuerversatz (X) in Bezug auf eine oder mehrere der Zellen zu definieren, die in dem aktiven Satz verbleiben, derart, dass die Zeitsteuerung (35) der einen oder mehreren Zellen, die in dem aktiven Satz verbleiben, plus den Zeitsteuerversatz (X) gleich zu der Zeitsteuerung (33) der entfernten Referenzzelle ist; und
die Uplink-Übertragungsrahmenzeitsteuerung (36) bezüglich der Zeitsteuerung (35) der einen oder mehreren Zellen, die in dem aktiven Satz verbleiben, plus dem Zeitsteuerversatz (X) zu definieren.

9. Mobilkommunikationsgerät (10) nach Anspruch 8, wobei die Uplink-Übertragungsrahmenzeitsteuerung (36) als eine feste Zeit nach der Zeitsteuerung (35) der einen oder mehreren Zellen, die in dem aktiven Satz verbleiben, plus dem Zeitsteuerversatz (X) definiert ist.

10. Mobilkommunikationsgerät (10) nach Anspruch 8, zur Verwendung in UMTS, wobei die Uplink-Übertragungsrahmenzeitsteuerung (36) als T0 nach der Zeitsteuerung (35) der einen oder mehreren Zellen, die in dem aktiven Satz verbleiben, plus dem Zeitsteuerversatz (X) definiert ist.

11. Mobilkommunikationsgerät (10) nach Anspruch 8, wobei der Zeitsteuerversatz (X) in Bezug auf die aktive Zelle definiert ist, die zuerst an dem aktiven Satz teilnahm.

12. Mobilkommunikationsgerät (10) nach Anspruch 8, wobei der Zeitsteuerversatz (X) in Bezug auf die aktive Zelle definiert ist, deren Downlink-Übertragungszeitsteuerung am nächsten der Downlink-Übertragungszeitsteuerung der vorangehenden Referenzzelle entspricht.

13. Mobilkommunikationsgerät (10) nach Anspruch 8, wobei der Zeitsteuerversatz (X) in Bezug auf die aktive Zelle definiert ist, von der das stärkste Signal empfangen wird.

14. Mobilkommunikationsgerät (10) nach Anspruch 8, wobei der Zeitsteuerversatz (X) in Bezug auf die Durchschnittszeitsteuerung aller der Zellen in dem aktiven Satz definiert ist.

## Revendications

1. Procédé de définition d'un temps de trame de transmission de liaison montante, pour une utilisation dans un système de communications mobiles dans lequel un équipement d'utilisateur (10) peut avoir des liaisons radio avec de multiples cellules (12, 14, 16, 18), et dans lequel les cellules avec lesquelles l'équipement d'utilisateur (10) a des liaison radio définissent un ensemble actif, dans lequel le temps (36) de trame de transmission de liaison montante est défini en référence au temps (33) de trame de transmission de liaison descente d'une cellule de référence sélectionnée à partir dudit ensemble actif,
le procédé étant **caractérisé par**,
lorsque la cellule de référence est enlevée de l'ensemble actif, la définition d'un décalage temporel (X) en référence à une ou plusieurs des cellules restant dans l'ensemble actif, de manière que le temps (35) de la ou des cellules restant dans l'ensemble actif augmenté du décalage temporel (X) soit égal au temps (33) de la cellule de référence enlevée ; et
la définition du temps (38) de trame de transmission de liaison montante par rapport au temps (35) de la ou des cellules restant dans l'ensemble actif augmenté du décalage temporel (X).

2. Procédé selon la revendication 1, dans lequel le temps (36) de trame de transmission de liaison montante est défini comme étant un temps fixe après le temps (35) de la ou des cellules restant dans l'ensemble actif augmenté du décalage temporel (X).

3. Procédé selon la revendication 2, destiné à être utilisé dans le système de téléphonie mobile universelle UMTS, dans lequel le temps (36) de trame de transmission de liaison montante est défini comme étant T₀ après le temps (35) de la ou des cellules restant dans l'ensemble actif augmenté du décalage temporel (X).

4. Procédé selon la revendication 1, dans lequel le décalage temporel (X) est défini en référence à la cellule active qui rejoint en premier l'ensemble actif.

5. Procédé selon la revendication 1, dans lequel le décalage temporel (X) est défini en référence à la cellule active dont le temps de transmission de liaison descendante correspond le plus étroitement au temps de transmission de liaison descendante de la cellule de référence précédente.

6. Procédé selon la revendication 1, dans lequel le décalage temporel (X) est défini en référence à la cellule active de laquelle le signal le plus fort est alors reçu.

7. Procédé selon la revendication 1, dans lequel le décalage temporel (X) est défini en référence au temps moyen de toutes les cellules dans l'ensemble actif.

8. Dispositif (10) de communications mobile, destiné à être utilisé dans un système de communications mobiles dans lequel un dispositif de communications mobile peut avoir des liaisons radio avec de multiples cellules (12, 14, 16, 18), et dans lequel les cellules avec lequel le dispositif (10) a des liaisons radio définissent un ensemble actif,
lequel dispositif (10) comporte des moyens destinés à définir un temps (36) de trame de transmission de liaison montante en référence au temps (33) de trame de transmission de liaison descendante d'une cellule de référence sélectionnée à partir dudit ensemble actif, et
**caractérisé en ce que** le dispositif (10) est conçu, lorsque la cellule de référence est enlevée de l'ensemble actif, pour :
définir un décalage temporel (X) en référence à une ou plusieurs des cellules restant dans l'ensemble actif, tel que le temps (35) de la ou des cellules restant dans l'ensemble actif augmenté du décalage temporel (X) est égal au temps (33) de la cellule de référence enlevée ; et pour
définir le temps (36) de trame de transmission de liaison montante par rapport au temps (35) de la ou des cellules restant dans l'ensemble actif augmenté du décalage temporel (X).

9. Dispositif de communications mobile (10) selon la revendication 8, dans lequel le temps (36) de trame de transmission de liaison montante est défini comme étant un temps fixe après le temps (35) de la ou des cellules restant dans l'ensemble actif augmenté du décalage temporel (X).

10. Dispositif de communications mobile (10) selon la revendication 8, destiné à être utilisé dans le système UMTS, dans lequel le temps (36) de trame de transmission de liaison montante est défini comme étant T₀ après le temps (35) de la ou des cellules restant dans l'ensemble actif augmenté du décalage temporel (X).

11. Dispositif de communications mobile (10) selon la revendication 8, dans lequel le décalage temporel (X) est défini en référence à la cellule active qui a rejoint en premier l'ensemble actif.

12. Dispositif de communications mobile (10) selon la revendication 8, dans lequel le décalage temporel (X) est défini en référence à la cellule active dont le temps de transmission de liaison descendante correspond le plus étroitement au temps de transmission de liaison descendante de la cellule de référence précédente.

13. Dispositif de communications mobile (10) selon la revendication 8, dans lequel le décalage temporel (X) est défini en référence à la cellule active de laquelle le signal le plus fort est alors reçu.

14. Dispositif de communication mobile (10) selon la revendication 8, dans lequel le décalage temporel (X) est défini en référence au temps moyen de toutes les cellules dans l'ensemble actif.
